Europäisches Patentamt

European Patent Office

Office européen des brevets

(19)

(11) **EP 1 494 044 B1**

(12) **EUROPÄISCHE PATENTSCHRIFT**

(45) Veröffentlichungstag und Bekanntmachung des
Hinweises auf die Patenterteilung:
**16.08.2006 Patentblatt 2006/33**

(51) Int Cl.:
*G01S 7/48* (2006.01)     *G01S 17/93* (2006.01)
*G01S 17/89* (2006.01)

(21) Anmeldenummer: **04012678.1**

(22) Anmeldetag: **28.05.2004**

(54) **Verfahren zur Hinderniserkennung und Geländeklassifikation**

Method of obstacle recognition and terrain classification

Method of récognition d'obstacles et classification des terrains

(84) Benannte Vertragsstaaten:
**AT BE BG CH CY CZ DK EE ES FI FR GB GR HU
IE IT LI LU MC NL PL PT RO SE SI SK TR**

(30) Priorität: **03.07.2003 DE 10330011**

(43) Veröffentlichungstag der Anmeldung:
**05.01.2005 Patentblatt 2005/01**

(73) Patentinhaber: **EADS Deutschland GmbH
85521 Ottobrunn (DE)**

(72) Erfinder:
• **Schaefer, Christoph, Dr.
88048 Friedrichshafen (DE)**
• **Berger, Werner
88719 Stetten (DE)**
• **Baten, Stefan
88074 Meckenbeuren-Brochenzell (DE)**

(74) Vertreter: **Meel, Thomas
Patentassessor
c/o EADS Deutschland GmbH
Patentabteilung FCL6
88039 Friedrichshafen (DE)**

(56) Entgegenhaltungen:
• **IN SO KWEON ET AL: "HIGH-RESOLUTION
TERRAIN MAP FROM MULTIPLE SENSOR DATA"
IEEE TRANSACTIONS ON PATTERN ANALYSIS
AND MACHINE INTELLIGENCE, IEEE INC. NEW
YORK, US, Bd. 14, Nr. 2, 1. Februar 1992
(1992-02-01), Seiten 278-292, XP000248484 ISSN:
0162-8828**
• **CHEN-CHAU CHU ET AL: "MULTI-SENSOR
IMAGE INTERPRETATION USING LASER RADAR
AND THERMAL IMAGES" PROCEEDINGS OF
THE CONFERENCE ON ARTIFICIAL
INTELLIGENCE APPLICATIONS. MIAMI BEACH,
FEB. 24 - 28, 1991, NEW YORK, IEEE, US, Bd. VOL.
1 CONF. 7, 24. Februar 1991 (1991-02-24), Seiten
190-196, XP000298923 ISBN: 0-8186-2135-4**

**Beschreibung**

Die Erfindung betrifft ein Verfahren zur Hinderniserkennung und Geländeklassifikation für Geländefahrzeuge. Es ist insbesondere einsetzbar für autonome, unbemannte Geländefahrzeuge.

IN SO KWEON ET AL: "HIGH-RESOLUTION TERRAIN MAP FROM MULTIPLE SENSOR DATA" IEEE TRANSACTIONS ON PATTERN ANALYSIS AND MACHINE INTELLIGENCE, IEEE INC. NEW YORK, US, Bd. 14, Nr. 2, 1. Februar 1992 (1992-02-01), Seiten 278-292, ISSN: 0162-8828 offenbart ein Verfahren zur Hinderniserkennung und Geländeklassiflkation für Geländefahrzeuge.

Der Erfindung liegt die Aufgabe zugrunde, ein Verfahren zu schaffen, mit der eine zuverlässige Geländeklassifikation hinsichtlich der Befahrbarkeit ermöglicht wird, so dass insbesondere Hindernisse sowie befahrbares Gelände erkannt werden.

Diese Aufgabe wird mit dem Verfahren nach Patentanspruch 1 gelöst. Vorteilhafte Ausführungen sind Gegenstand von Unteransprüchen.

Das erfindungsgemäße Verfahren weist folgende Verfahrensschritte auf:

- Erzeugung eines Entfernungsbilds des Geländes mittels eines entfernungsbildgebenden Sensors;

- Umrechnung der Sensordaten in eine räumliche Fläche, die aus einzelnen finiten Flächenelementen besteht und die die vom Sensor abgetastete Szene modelliert, und Projektion der räumlichen Fläche auf eine in einem erdfesten Koordinatensystem dargestellten Geländeverlaufsfunktion;

- stetige Fortsetzung der Geländeverlaufsfunktion an undefinierten Stellen;

- Erzeugung einer Konfidenzfunktion für die Geländeverlaufsfunktion in demselben Koordinatensystem wie die Geländeverlaufsfunktion, wobei die Konfidenzfunktion ein Maß für die Vertrauenswürdigkeit der Geländeverlaufsfunktion darstellt und abhängig ist vom Abstand eines Wertes der Geländeverlaufsfunktion von einem Sensormesspunkt;

- Erzeugung einer Bodenverlaufsfunktion durch Glättung der Geländeverlaufsfunktion;

- Erzeugung einer Geländebewertungsfunktion durch Auswertung des Steigungsverhaltens der Geländeverlaufsfunktion, durch Vergleich der Geländeverlaufsfunktion mit der Bodenverlaufsfunktion sowie durch Auswertung der Konfidenzfunktion ;

- Klassifikation des Geländes hinsichtlich seiner Befahrbarkeit unter Verwendung der Geländebewertungsfunktion. Diese Klassifizierung kann in Form einer so genannten Hinderniskarte (HK) dargestellt werden, in der die einzelnen Geländeklassen (z.B. befahrbares Gelände, negative Hindernisse (Vertiefungen), positive Hindernisse) farblich kodiert werden.

In Ergänzung des erfindungsgemäßen Verfahrens kann auf der Basis der in der erzeugten Hinderniskarte enthaltenen Informationen eine Route zur Überquerung der im Gelände vorhandenen Gräben gesucht und erkannt werden. Die einzelnen Verfahrensschritte dabei sind:

- Filterung der Geländebewertungsfunktion mit Grabenschablonen verschiedener Breiten und Richtungen gemäß der Methode des Matched Filtering zur Ermittlung des Grabenverlaufs oder Grabenrandverlaufs,

- Suche nach möglichen Routen zur Grabenüberquerung, ausgehend von erkannten Grabenrandpunkten und senkrecht zum Grabenrand verlaufend, und Validierung der Route mittels Verwendung der Gelände-, der Bodenverlaufs- und der Konfidenzfunktion.

Der Code der mit dem erfindungsgemäßen Verfahren erzeugten Hinderniskarten kann an einen fahrzeugseitigen Rechner weitergegeben werden, der eine autonome Navigation - also insbesondere Hindernisumgehung und Grabenüberquerung - durchführt und eine Schnittstelle zur Fahrzeugsteuerung besitzt.

Das erfindungsgemäße Verfahren ist echtzeitfähig.

Ein System zur Durchführung des erfindungsgemäßen Verfahrens umfasst einen entfernungsbildgebenden Sensor, einen Echtzeitprozessor sowie optional ein Navigationssystem zur Sensordatenerfassung.

**Entfernungsbildgebender Sensor**

Der entfernungsbildgebende Sensor (Entfernungsbildkamera EBK) ist bevorzugt ein abbildendes Laserradar, wie es z.B. in der DE 39 42 770 C2 oder DE 43 20 485 A1 beschrieben ist. Eine typische, für die Grabenerkennung geeignete Ausführung einer EBK generiert 4 Entfernungsbilder pro Sekunde mit den Eigenschaften:

- Größe: 64 x 128 (vertikal x horizontal)

- Gesichtsfeld: 30˚ x 60˚ (vertikal x horizontal)

- Winkelauflösung: ca. 0.5˚ in beiden Richtungen

- Messreichweite: ca. 50 m

- Messauflösung in Messrichtung: 3 cm

Die EBK ist im Fahrzeug nach vorne schauend ausgerichtet und dient als Datenquelle für den Echtzeitprozessor.
Echtzeitprozessor
Der Echtzeitprozessor kann als kommerziell verfügbarer Prozessor ausgeführt sein und sollte vorteilhaft eine Rechenleistung von ca. 1 GFLOPS aufweisen. Output des Echtzeitprozessors sind die erwähnten Hinderniskarten, die als Datenwörter (Codes) auf den Knoten eines diskreten, horizontalen Gitters dargestellt werden.
Nachfolgend wird das erfindungsgemäße Verfahren in Form eines konkreten Ausführungsbeispiels und unter Bezugnahme auf Figuren erläutert. Es zeigen:

Fig. 1 die Originalgeländeszene aus der Sensorperspektive;

Fig. 2 das mit der EBK erzeugte Entfernungsbild der Szene gemäß Fig. 1;

Fig. 3 eine farbcodierte Hinderniskarte, erzeugt nach dem erfindungsgemäßen Verfahren aus dem Entfernungsbild gemäß Fig. 2, die EBK befindet sich in der Mitte des unteren Bildrands und blickt in Pfeilrichtung; die Farben der einzelnen zusammenhängenden Felder auf der HK sind jeweils angegeben.

Fig. 4 ein Darstellung eines finiten Flächenelements FE ("Finites Element"); je drei Pixel im Entfernungsbild erzeugen ein derartiges Dreieckselement im Raum;

Fig. 5 Konstruktion der Geländebewertungsfunktion: ein positives Hindernis innerhalb der Geländeverlaufsfunktion *G* wird von der zugehörigen Bodenverlaufsfunktion *A* abgeschnitten;

Fig. 6 Konstruktion der Geländebewertungsfunktion: ein Stufensignal innerhalb der Geländeverlaufsfunktion *G* wird mit Hilfe der Bodenverlaufsfunktion A als ein Graben auf der einen Seite und ein positives Hindernis auf der anderen Seite interpretiert;

Fig. 7 Konstruktion einer Konfidenzfunktion *T* : Beispiel für eine Realisierung der Funktion $p(\lambda;\lambda_0,\Delta\lambda)$;

Fig. 8 Grabenranderkennung mittels Matched Filtering: Definition der orientierten Grabenschablone.

Nachfolgend wird die Generierung der Hinderniskarte beschrieben. Wie bereits erwähnt, dienen die HK-Codes einem nachfolgenden Funktionsmodul zur Navigation im von Sensor erfassten Gelände. Die Generierung erfolgt in den Schritten:

1. Erzeugung eines Entfernungsbilds;

2. Datentransformationen;

3. Berechnung der Geländebewertungsfunktion;

4. Suche nach Routen zur Überwindung von Gräben.

**Erzeugung eines Entfernungsbilds**

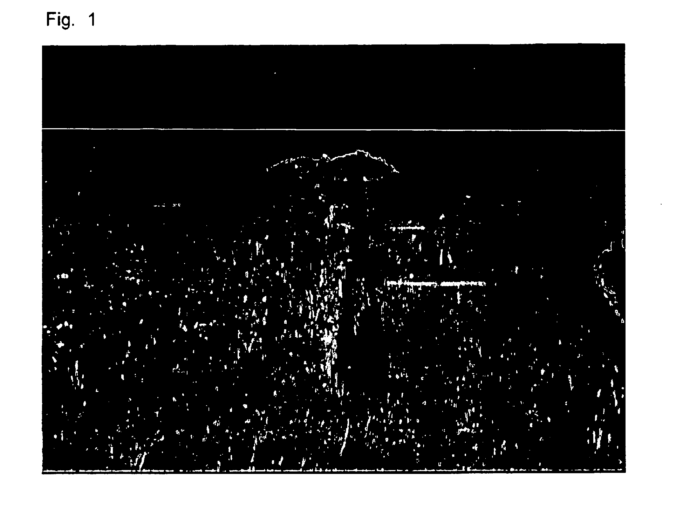

Fig. 1 zeigt (aus der Sensorperspektive) die Originalszene. Das darin enthaltene Gelände soll mittels des erfindungsgemäßen Verfahrens hinsichtlich seiner Befahrbarkeit klassifiziert werden. Man erkennt insbesondere ein sich in Sensorblickrichtung erstreckender Graben mit annähernd senkrechten Wänden. Seine Breite ist am jenseitigen Ende etwa doppelt so groß als am diesseitigen Ende. Hinter dem Graben ist ein positives Hindernis in Form eines Erdhügels zu erkennen. Der Bildhintergrund wird vollständig von dichtem Nadelwald gebildet.

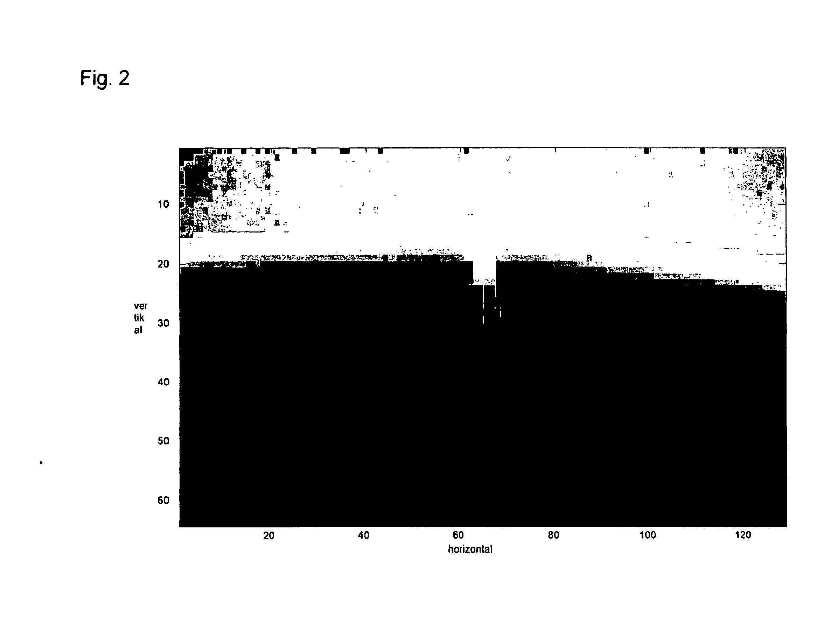

Fig. 2 zeigt das mit einer EBK aufgenommene zugehörige Entfernungsbild der Originalszene gemäß Fig. 1. Ein Entfernungsbild ist eine zweidimensionale Vielfalt von Pixeln, wobei der einem Pixel zugeordnete Farbwert oder Grauwert nicht (wie bei einem herkömmlichen optischen Bild der Szene) der Reflektivität, sondern der Entfernung des jeweiligen Pixels vom Sensor entspricht. In dem in Fig. 2 gezeigten Entfernungsbild ist die Entfernung eines Bildpunkts um so größer, je heller die Graustufe ist, in der er dargestellt ist.

**Datentransformationen**

Die Datentransformationen überführen die EBK-Daten von ihrer ursprünglichen Repräsentation als Entfernungsbild in Funktionsdarstellungen vom Typ $z = f(x,y)$ in einem erdfesten, kartesischen Koordinatensystem. Die z-Achse in diesem System verläuft vertikal. Alle Funktionen werden bei der Implementierung zu diskreten Funktionen, d.h. sie sind nur auf Gitterknoten $K_{kl} = (x_k, y_l)$ definiert:

$$z_{kl} = f(x_k, y_l)$$

Die Datentransformationen selbst beinhalten noch keine Erkennungs- oder Klassifikationsleistungen und verlaufen in den nachfolgend dargestellten Einzelschritten.

**Einlesen der Entfernungsbildrohdaten -** Die EBK-Rohdaten werden bildweise eingelesen, dekodiert, und auf Entfernungswerte umgerechnet. Ungültige Messungen - also solche, bei denen der Empfängerschwellwert nicht erreicht wurde oder bei denen der zulässige Messwertbereich unter- oder überschreiten wurde - werden vom Sensor in vorteilhafter Ausführung als solche bemerkt und entsprechend kodiert. Die betreffenden Entfernungsbildpixel werden dann als Fehlstellen gekennzeichnet.

**Interpolation des Entfernungsbildes** - Fehlstellen im Entfernungsbild sind aus physikalischen Gründen - wie z.B. Totalreflexion am Objekt oder Reichweitenüberschreitung bei der Messung - unvermeidlich, verursachen aber später störende "Löcher" (weiße Gebiete) in der HK. Verschiedene Interpolationsverfahren zum Füllen solcher Löcher sind möglich. Beispielsweise können Fehlstellen im Entfernungsbild, die wenigstens zwei einander vertikal, horizontal oder diagonal gegenüberliegende, intakte Pixelnachbarn besitzen, durch den Mittelwert der zugehörigen Entfernungswerte aufgefüllt werden. Dieser Interpolationsvorgang wird dreimal sukzessive durchgeführt und verbessert die Auswerteergebnisse erheblich.

**Koordinatentransformation** - Das nun vorliegende, skalare Entfernungsbild wird in eine Matrix von 3-d Vektoren umgerechnet. Dies geschieht in zwei Schritten: zunächst werden die (gültigen) Messwerte unter Berücksichtigung der Sensorgeometrie in sensorfesten Koordinaten dargestellt. Anschließend werden, unter Berücksichtigung der aktuellen Sensorposition und -lage, erdfeste Koordinaten bestimmt.

**Einlesen von Sensorzustandsdaten -** Bei hoher Dynamik der Fahrzeugbewegung sind für eine korrekte Berechnung dieser erdfesten Koordinaten dynamische Positions- und Lagedaten des Sensors erforderlich, die von einem Fahrzeugnavigationssystem mit synchroner Schnittstelle zum Echtzeitprozessor kommen müssen. Diese Zustandsdaten gehen in die obige Transformation. Bei mittlerer Dynamik ist dies, bei einer Bilddatenrate von mindestens 4 Hz und Einzelbildverarbeitung, verzichtbar.

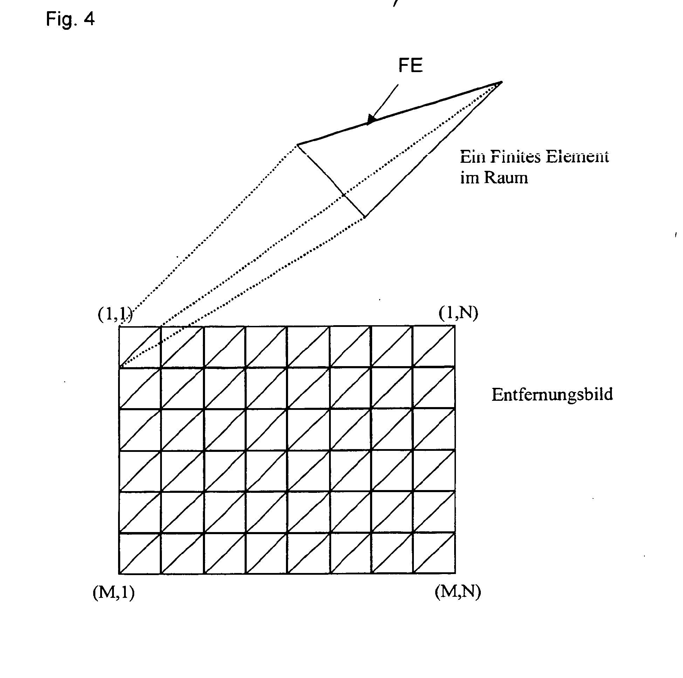

**Szenendarstellung als Oberfläche aus Finiten Elementen -** Um nicht nur eine unstrukturierte, 3-d Punktwolke, sondern eine zweidimensionale Flächendarstellung der erfassten Szene zu erhalten, wird aus je drei benachbarten Pixeln im Entfernungsbild (EB) ein Finites Element (FE) generiert (Fig. 4). Genauer gesagt bilden jeweils drei Vektoren, die zu benachbarten Pixeln im EB gehören, die Eckpunkte eines Dreiecks im erdfesten Koordinatensystem (KS). Durch passende Partition des EB in Sätze von je drei benachbarten Pixeln erhält man so eine zusammenhängende Oberfläche im Raum, welche die abgetastete Szene modelliert.

Pixel im EB, die Fehlstellen sind, bleiben unberücksichtigt; d.h. alle FE, für die das betreffende Pixel Eckpunkt geworden wäre, kommen nicht zustande. Die modellierte Szenenoberfläche kann also durchaus Löcher besitzen.

Jedes FE, welches nicht exakt vertikal verläuft, besitzt eine lineare funktionale Darstellung

$$z = a_i + b_i \cdot x + c_i \cdot y$$

wobei die drei Koeffizienten $a_i, b_i, c_i$ spezifisch für das i-te FE sind und sich aus den Koordinaten der drei Eckvektoren berechnen lassen. Der Definitionsbereich für diese Darstellung beschränkt sich freilich auf die vertikale Projektion des FE auf die x,y-Ebene, ist mithin also dreieckig.

**Berechnung der Geländeverlaufsfunktion** - Die Notwendigkeit für die beschriebene Szenenoberfläche ergibt sich aus dem Wunsch, für die weitere Verarbeitung der Daten eine Geländeverlaufsfunktion

$$z = G(x, y)$$

in dem erdfesten Koordinatensystem mit vertikaler z-Achse zur Verfügung zu haben. Für die numerische Darstellung der Geländeverlaufsfunktion wird ein regelmäßiges, quadratisches Gitter mit rechteckiger Berandung über die x,y-Ebene gelegt. Die Schrittweite, d.h. in der HK gewünschte Zellengröße, ist einstellbar. Über jedem Knoten dieses Gitters ist entweder ein FE (typischer Geländeverlauf), sind mehrere FE (komplexe Szene, z.B. Wald), oder ist kein FE anzutreffen (Fehlstelle im EB oder Verlassen des EBK-Gesichtsfeldes). Im ersten Fall wird zur Definition von $G$ an einem Knoten $(x_k, y_l)$ der z-Wert desjenigen FE (mit Index i) verwendet, in dessen Definitionsbereich der Knoten fällt:

$$G(x_k, y_l) = a_i + b_i \cdot x_k + c_i \cdot y_l$$

Im zweiten Fall wird der Maximalwert der z-Werte aller FE an dieser Stelle verwendet, in dessen jeweilige Definitionsbereiche der Knoten fällt. Im dritten Fall wird der Geländeverlaufsfunktion an dem betreffenden Knoten zunächst noch kein Wert zugewiesen; es wird später ein Ersatzwert eingefügt, damit später Rechenschritte durchführbar bleiben; vgl. den Abschnitt *Approximation und Fortsetzung von G durch eine Ebene.*

Mit der Geländeverlaufsfunktion ist eine Projektion der Sensordaten in eine eindeutige, im erdfesten Koordinatensystem und auf einem regelmäßigen Gitter definierten, diskreten Funktion gelungen, die einer weitergehenden Bearbeitung leichter zugänglich ist als die ursprüngliche Punktwolke. Bei komplexem Szenenverlauf (mit bzgl. z mehrdeutiger Szenenoberfläche) beschreibt $G$ die "obere Einhüllende" der Szene.

**Berechnung einer Konfidenzfunktion -** Die z-Werte der $G$-Funktion besitzen nicht alle dieselbe Vertrauenswürdigkeit als tatsächliche Messwerte. Beispielsweise können sich - durch Abschattung bedingt - hinter der vorderen Wand eines Quergrabens längliche FE bilden, so dass es bei der sich anschließenden Berechnung von $G$ relativ viele Werte von $G$ geben kann, die von tatsächlichen Messwerten weit entfernt sind und die den wahren Geländeverlauf evtl. nicht richtig wiedergeben.

Aus diesem Grund wird zusätzlich die so genannte Konfidenzfunktion

$$z = T(x, y)$$

eingeführt, die auf demselben rechteckigen, uniformen x,y-Gitter definiert ist wie $G$. $T$ gibt mit einem Wert zwischen 1 und 0 an jedem Knotenpunkt an, ob sich der betreffende Wert von $G$ mehr oder weniger nahe an einem tatsächlich EBK-Messpunkt befindet und daher mehr oder weniger vertrauenswürdig ist. Die dabei verwendete Metrik berücksichtigt die horizontale Dichte der Messpunkte, wie sie sich auf perfekt eben verlaufenden Gelände darstellen würde. Dies bedeutet, dass im Fernfeld der HK größere horizontale Abstände zu tatsächlichen Messpunkten erlaubt sind als im Nahfeld, ohne dass die Konfidenz verloren geht. Bei Sprüngen im Entfernungsbild - z.B. am vorderen Rand eines quer zur Blickrichtung verlaufenden Grabens - sinkt die Konfidenz der Werte von $G$ rasch auf 0, weil im Graben der horizontale Abstand zu den letzten realen Messwerten (am Grabenrand) rasch anwächst. Es gibt mehrere Möglichkeiten, Konfidenzfunktionen zu konstruieren. Ein Beispiel ist in den untenstehenden Implementierungsbeispielen unter Ziff. 1 angegeben.

Die Konfidenzfunktion ist ein geeignetes Mittel zur Erkennung von quer verlaufenden Gräben auch aus relativ großer Entfernung und hat sich deshalb für die Grabenerkennung als unverzichtbar erwiesen. In der HK werden Gebiete geringer Konfidenz mit einer eigenen Farbe (im vorliegenden Beispiel weiß) kodiert. Mit abnehmender Entfernung zum Graben werden diese in dem Maße kleiner, wie dessen Grund ausgeleuchtet wird.

Mit der Generierung der *G*- und *T*-Funktionen aus den Entfernungsbilddaten sind die Datentransformationen abgeschlossen. Es folgt als zweite Stufe die Berechnung der diskreten Geländebewertungsfunktion λ = *Z*(*x,y*), die wie die *G*- und T-Funktionen an den Knoten des HK-Gitters definiert ist. λ repräsentiert hierbei den gewünschten HK-Code, der das Gelände am betreffenden Knoten als Grabenpunkt, befahrbaren Punkt usw. klassifiziert.

**Berechnung der Geländebewertungsfunktion**

Die Geländebewertung, d.h. die Berechnung von *Z*(*x,y*), gelingt durch die Anwendung folgender Methoden:

1. durch Analyse des Steigungsverhaltens von *G*(*x,y*) (nach evtl. Glättung zur Beseitigung von lokalen Störungen);

2. durch Vergleich der Geländeverlaufsfunktion *G*(*x,y*) mit einer Bodenverlaufsfunktion *A*(*x,y*).

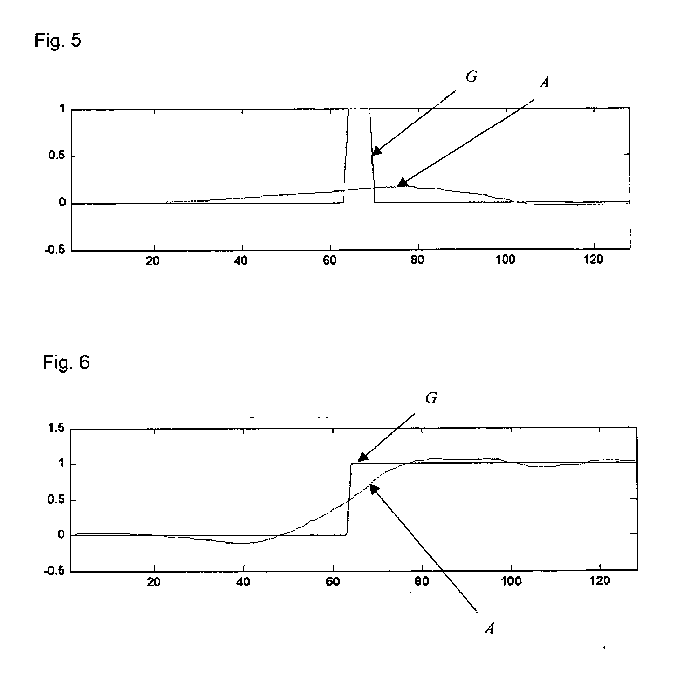

Die Bodenverlaufsfunktion folgt grundsätzlich dem tatsächlichen Geländeboden, schneidet aber positive, isolierte Hindernisse wie Pfähle, Felsbrocken, Bäume usw. ab (vgl. Fig. 5) und überspannt negative Hindernisse wie Gräben und Löcher. Durch Vergleich von *G*(*x,y*) mit *A*(*x,y*) ergibt sich die Möglichkeit zur positiven bzw. negativen Hinderniserkennung:

*G*(*x, y*) < *A*(*x, y*) - *h*$_1$ *bedeutet negatives Hindernis am Ort* (*x, y*);
*G*(*x, y*) > *A*(*x, y*) + *h*$_2$ *bedeutet positives Hindernis am Ort* (*x, y*)

*h*$_1$ > 0 und *h*$_2$ > 0 sind kleine, positive Schwellen, die geringfügige Abweichungen zwischen *G*(*x,y*) und *A*(*x,y*) unterdrücken.

Mathematisch erhält man die Bodenverlaufsfunktion durch Glättung der Geländeverlaufsfunktion. Das entwikkelte Glättungsverfahren ist bevorzugt zweistufig und nachstehend erläutert.

Jedes Geländebewertungsverfahren muss drei Grundtypen von Hindernissen handhaben können: positive Hindernisse, negative Hindernisse, und Stufenhindernisse. Die Erkennung von positiven und negativen Hindernissen gelingt, wie erläutert, durch Vergleich von *G*(*x,y*) mit *A*(*x,y*) Bei Geländestufen (vgl. Fig. 6) führt der Vergleich von *G*(*x, y*) mit *A*(*x,y*) zur Erkennung eines positiven Hindernisses auf der einen Seite der Stufe sowie der eines Grabens auf der anderen. Obwohl der erkannte Graben ein virtueller ist, wird auf diese Weise dennoch zuverlässig vor Geländestufen gewarnt, zumal die Gräben später nicht als überbrückbar klassifiziert werden können (siehe unten Ziff. 4). Die zuverlässige Stufenerkennung gelingt zusätzlich durch den hohen Steigungsbetrag von *G*(*x,y*) am Ort der Stufe.

Bei einem sehr breiten Graben überspannt *A*(*x,y*) diesen freilich nicht mehr, sondern berührt den Grabenboden mindestens in der Grabenmitte. In diesem Fall wird der Graben also nicht mehr als ein einziges, zusammenhängendes Hindernis interpretiert, sondern als Folge von zwei Hindernissen, die Geländestufen darstellen: eine Abwärtsstufe und eine Aufwärtsstufe. Auf diese Weise kann auch der Grabenboden grundsätzlich wieder als befahrbar eingestuft werden. Dies ist durchaus erwünscht, was man am Beispiel eines ausgetrockneten Flussbetts o.ä. nachvollziehen kann.

Im Folgenden werden die Einzelschritte zur Berechnung der Geländebewertungsfunktion *Z*(*x,y*) erläutert.

**Beschränkung von *G* nach oben und unten -** z-Werte von *G*, die nach oben oder unten um mehr als *t* Meter von der Geländehöhe am Fußpunkt des Sensors (*z* = 0 ) abweichen, werden beschränkt, um extreme Schwingungen bei den nachfolgenden Glättungsfunktionen zu vermeiden:

$$\widetilde{G}_{kl} = \begin{cases} t & \textit{falls } G_{kl} > t \\ G_{kl} & \textit{falls } -t \leq G_{kl} \leq t \\ -t & \textit{falls } G_{kl} < -t \end{cases}$$

**Approximation und Fortsetzung von *G* durch eine Ebene** - Der in einem Einzelbild erfasste Geländeverlauf füllt wegen des begrenzten Sensorgesichtsfeldes bzw. wegen Abschattungen durch Szenenobjekte den für die Verarbeitung erforderlichen rechteckigen und lückenlosen Definitionsbereich der Hinderniskarte in der x,y-Ebene nicht aus, so dass eine stetige Fortsetzung dieses Geländeverlaufs notwendig ist. Deshalb wird in einer bevorzugten Ausführungsform für jedes Bild eine lineare, zweidimensionale Ebene *P(x,y)* = *a·x* + *b·y* + *c* "optimal" in die Szene gelegt, die *G* in dessen Definitionsbereich approximiert und die Funktion dort, wo sie nicht definiert ist, geeignet fortsetzt. Zur Berechnung der Parameter *a,b,c* kommt eine dreiparametrige Houghtransformation einmal pro Entfernungsbild zur Anwendung. Im Folgenden bezeichne wiederum $\widetilde{G}$ die in der beschriebenen Weise fortgesetzte, also lückenlos definierte, beschränkte Geländeverlaufsfunktion. Neben diesem linearen Ansatz, der einen guten Kompromiss zwischen Genauigkeit und Rechenaufwand darstellt, können auch sonstige, an sich bekannte Verfahren für die Gewinnung einer stetigen, möglichst glatten Fortsetzung von *G*, z. B mittels Interpolation, Extrapolation angewandt werden.

Erster Glättungsschritt - Die Geländeverlaufsfunktion $\tilde{G}$ wird einem ersten Glättungsschritt unterzogen. Dazu wird an $\tilde{G}$ auf ihrem rechteckigen Definitionsbereich beispielsweise eine zweidimensionale, vierstufige Diskrete Wavelet Transformation (DWT) durchgeführt. Als Ergebnis der Waveletzerlegung erhält man insgesamt 13 Subbänder. Von diesen wird nur das LL-Band der vierten Stufe zur Rekonstruktion des Signals verwendet, alle anderen Subbänder werden auf 0 gesetzt. Das rekonstruierte Signal $B$ stellt die gewünschte Glättung des ursprünglichen Signals dar. $B$ ist auf demselben Gitter definiert wie $\tilde{G}$.

Wie sich in der Praxis zeigt, ist $B$ noch durch relativ starke Überschwinger gekennzeichnet (dem Gibbs-Ringing bei der Fourier-Transformation ähnlich), die in der Nähe von großen positiven Hindernissen auftreten können. Mit $B$ werden deshalb zunächst große positive Hindernisse erkannt und aus $\tilde{G}$ entfernt, um durch anschließende, zweite Glättung eine bessere Approximation $A$ des Bodenverlaufs zu erhalten.

**Beseitigung großer positiver Hindernisse -** Dort, wo die Geländeverlaufsfunktion $\tilde{G}$ die Bodenverlaufsfunktion $B$ erheblich überragt, befindet sich ein Hindernis. Man erhält eine neue Geländeverlaufsfunktion $\tilde{G}$, ohne die großen positiven Hindernisse, wenn man die z-Werte von $\tilde{G}$ an diesen Stellen durch P ersetzt:

$$\hat{G}(x,y) = \begin{cases} P(x,y) & \textit{falls } \widetilde{G}(x,y) > B(x,y) + p \\ \widetilde{G}(x,y) & \textit{sonst} \end{cases}$$

Diese Definition kommt in der Praxis natürlich nur an den diskreten Knoten $(x_k, y_l)$ zur Anwendung.

Zweiter Glättungsschritt - Die derart erhaltene Geländeverlaufsfunktion $\tilde{G}$ wird nun wie zuvor $\tilde{G}$ mittels DWT geglättet. Dies führt zu einer gegenüber $B$ verbesserten, zweiten Bodenverlaufsfunktion $A$ mit erheblich schwächeren Überschwingern. Mit Hilfe von $G$ und $A$ wird im folgenden die Geländebewertungsfunktion $Z$, aus der sich die Farbkodierung der HK ableiten lässt, berechnet.

**Berechnung der Geländebewertungsfunktion** - Die Geländebewertungsfunktion $\lambda = Z(x,y)$, die auf demselben diskreten Gitter definiert wird wie die Funktionen $G(x,y)$ und $A(x,y)$, nimmt verschiedene Werte an, die bei der Generierung der HK auf diesem Gitter als Farben kodiert werden.

$Z(x,y) = 1$ sind Knoten, an denen sich positive Hindernisse befinden, die nicht überfahrbar sind. Dieser Wert wird dort gesetzt, wo die Geländeverlaufsfunktion die Bodenverlaufsfunktion um mindestens $h_2$ Meter überragt. Diese Knoten werden in der HK rot kodiert.

$Z(x,y) = -1$ sind Knoten, an denen sich Gräben befinden, die entweder umfahren oder überbrückt werden müssen (siehe die untenstehenden Erläuterungen zum Verfahrensschritt "Überwindung von Gräben"). Dieser Wert wird dort gesetzt, wo die Geländeverlaufsfunktion die Bodenverlaufsfunktion um eine entfernungsabhängige Schwellengröße $h_1$ unterläuft. Diese Knoten werden blau kodiert.

$Z(x,y) = -2$ sind Knoten, an denen die ursprüngliche Geländeverlaufsfunktion $G$ undefiniert ist oder einen geringen Konfidenzwert $T(x, y) < 0.5$ besitzt. Diese Knoten werden weiß kodiert.

Alle übrigen Knoten erhalten einen $\lambda$ zwischen 0 und 1 zugewiesen, der proportional zum Gradienten der Geländeverlaufsfunktion $G$ ist:

$$\lambda(x,y) = \min\{c \cdot |\nabla G(x,y)| ; 1\}$$

Ein niedriger Betrag des Gradienten führt zu grüner Kodierung der zugehörigen Knoten, was Befahrbarkeit signalisiert. Ein hoher Betrag des Gradienten kann sowohl von lokaler Rauhigkeit des Geländes als auch von erheblicher globaler Geländeneigung herrühren. In jedem Fall wird ab einer bestimmten Betragshöhe eine gelbe Farbe kodiert, und die normierte Richtung des Gradienten wird an jedem solchen Knoten als schwarzer Pfeil dargestellt. Über einen Maximalwert hinausgehende Gradientenbeträge führen, wie Hindernisse, zum wert 1 der Geländebewertungsfunktion, und damit auch zu roter Farbgebung (ohne Pfeile) in der HK.

In der folgenden Tabelle sind die erwähnten HK-Codierungen sowie deren Bedeutung nochmals zusammenfassend angegeben. Selbstverständlich handelt es sich bei den gewählten Werten sowohl bei der Farb- wie auch der Zahlendarstellung lediglich um Beispiele.

| HK-Code | | Bedeutung für kodierten Gitterknoten |
|---|---|---|
| *Farbdarstellung* | *Zahlendarstellung* $\lambda = Z(x_k, y_l)$ | |
| weiß | -2 | Knoten ist abgeschattet (z.B. hinter Hindernis oder außerhalb Sensorgesichtsfeld) oder weist nur einen geringen Konfidenzwert auf |
| blau | -1 | negatives Hindernis (=Graben) |
| blau mit rotem Pfeil | (-0,99) - (-0,01) | Graben, der in der Pfeilrichtung (oder dazu entgegengesetzt) überquerbar ist (Die fahrzeugabhängige, maximale Grabenbreite ist als Verfahrensparameter einstellbar.) |
| grün | 0-0,49 | Befahrbarkeit |
| gelb mit schwarzem Pfeil | 0,5-0,99 | eingeschränkte Befahrbarkeit des Geländes; nur in der Richtung des Pfeiles (oder dazu entgegengesetzt) kann gefahren werden |
| rot | 1 | positives Hindernis |

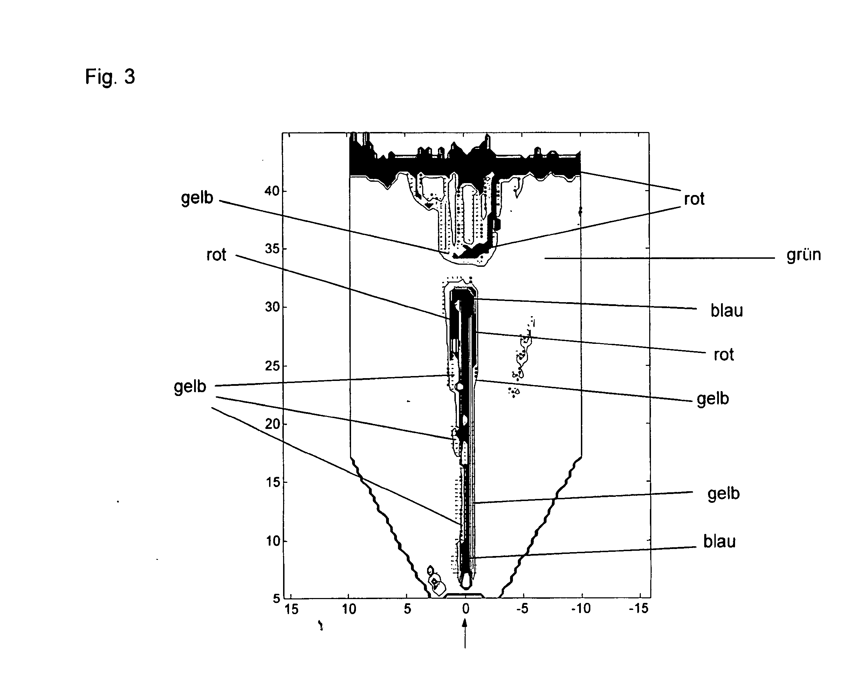

Ein Beispiel für eine erfindungsgemäß kodierte Hinderniskarte für die Originalszene gemäß Fig. 1 ist in Fig. 3 dargestellt. Der Sensorstandpunkt ist in der Mitte des unteren Bildrandes, und die Blickrichtung ist horizontal über die Darstellung von unten nach oben.

**Überwindung von Gräben**

Mit der Berechnung der Geländebewertungsfunktion sind auch alle Knoten der HK, die zu Gräben gehören, erkannt. Zur nun erforderlichen Grabenüberbrückung müssen Gräben als Objekte erfasst werden, und es müssen Grabenverlauf und - breite bestimmt werden.

**Erkennung von Grabenverläufen** - Für die Generierung von Überbrückungsvorschlägen für Gräben müssen zunächst längliche, nicht allzu breite Gräben erkannt werden. Dazu kann wie folgt vorgegangen werden: es wird aus der Geländebewertungsfunktion ein normiertes "Grabensignal"

$$W_0(x,y) = \begin{cases} -1 & falls\ Z(x,y) = -1 \\ 0 & sonst \end{cases}$$

abgeleitet, welches mit normierten Grabenschablonen verschiedener Breiten und Richtungen gefiltert wird (Methode des "Matched Filtering", siehe Ziff. 2 der untenstehenden Implementierungsbeispiele). Wenn das Filterergebnis an einem Knoten eine definierte Schwelle überschreitet, kann davon ausgegangen werden, dass sich hier eine der Schablone entsprechende Grabenstruktur befindet. Das Verfahren ist wegen seines integrierenden Charakters grundsätzlich robust.

Bei realen Testdaten erweisen sich die durch die Bedingung $Z(x,y) > -1$ definierten Gräbenränder jedoch als instabil, was mit der vorwärts schauenden Sensorgeometrie und der unpräzisen Erkennung des vorderen Grabenrandes bei Quergräben zusammenhängt. Hingegen erweist sich die gegenüberliegende Kante eines solchen Grabens bei realen Testdaten in der Regel als gut abgebildet, so dass mittels

$$W(x,y) = \begin{cases} -1 & falls\ Z(x,y) > \dfrac{1}{2} \\ 0 & sonst \end{cases}$$

- statt nach den Gräben selbst - nach länglichen und schmalen Grabenrändern gesucht wird.

Es wird nach Grabenrändern in vier Richtungen gesucht: parallel zur x-Achse, entlang der Diagonalen in der x,y-Ebene, parallel zur y-Achse, und entlang der Gegendiagonalen in der x,y-Ebene. Das heißt, dass die verwendeten Grabenschablonen jeweils eine dieser Richtungen einnehmen. Auch wird in jeder Richtung mit Grabenrändern verschiedener Breiten gefiltert.

Die derart ausgeführte Erkennung der Grabenränder mitsamt ihrer Richtungen erlaubt es, im folgenden von jedem einzelnen Grabenrandpunkt ausgehend und in senkrechter Richtung zum Randverlauf wandernd eine Grabenüberquerung zu versuchen.

**Überbrückung von Gräben** Von jedem Knoten ausgehend, der nach obigem Verfahren als zu einem Grabenrand zugehörig erkannt wurde, wird probeweise senkrecht zu der dem Knoten zugeordneten Grabenrichtung durch das x,y-Gitter geschritten. Dabei werden an jedem neuen Knotenpunkt die z-Werte der Geländeverlaufsfunktion $G$ und der Bodenverlaufsfunktion $A$ verglichen. Solange $G$ unterhalb von $A$ liegt, wird in der festgelegten Richtung weitergeschritten; sobald dies nicht mehr erfüllt ist, wird die Überquerung abgeschlossen. Dies geschieht vom Randpunkt ausgehend in beiden möglichen Richtungen.

Überquerungsrouten, die länger als eine vom Anwender vorgegebene maximale Länge sind, werden nicht zugelassen. Die gesamte Route wird nur validiert, wenn irgendwo auf ihr ein blauer Knoten oder ein Knoten geringer Konfidenz liegt; denn Überquerungsrouten sollen nicht über geringfügige Geländewellen (die durchfahrbar sind) gesucht werden, sondern nur über echte Gräben. Die Berechnung einer Route wird abgebrochen, falls man bei der Routenbildung auf einen rot kodierten Knoten der Geländebewertungsfunktion stößt oder auf einen für $G$ undefinerten Knoten; dies hieße nämlich, eine Überquerung in ein Hindernis hinein oder aus dem Gesichtsfeld heraus zu probieren.

Die so ermittelten Überquerungsrouten werden als Überquerungsempfehlung kodiert.

**Implementierungsbeispiele:**

**1 Konstruktion einer Konfidenzfunktion**

Die Konfidenzfunktion $z = T(x,y)$ wird auf den Knoten des HK-Gitters $K_{kl} = (X_k, y_l)$ definiert:

$$(*) \qquad T_{kl} = T(x_k, y_l)$$

Für die Werte der Konfidenzfunktion gilt

$$0 \leq T_{kl} \leq 1$$

Dabei steht der Wert 1 für volle Konfidenz, der Wert 0 für keine Konfidenz des zugehörigen Wertes von $G_{kl} = G(x_k, y_l)$.

Es wird im folgenden eine kontinuierliche Konfidenzfunktion $z = T(x,y)$ konstruiert, aus der die diskrete Konfidenzfunktion durch Auswertung gemäß (*) berechnet wird.

Es seien für $i = 1,...,I$ die Vektoren $P_i = (x_i, y_i, z_i)$ Messpunktvektoren in erdfesten Koordinaten. (Der Übersichtlichkeit halber hier nur einparametrig indiziert.) Für jeden einzelnen Messpunkt $P_i$ wird zunächst eine anteilige Konfidenzfunktion $z = T_i(x, y)$ definiert. Die Konfidenzfunktion insgesamt setzt sich später aus den einzelnen anteiligen Konfidenzfunktionen zusammen. Es wird zunächst die Konstruktion einer anteiligen Konfidenzfunktion dargestellt.

In der Nähe der Messpunktkomponenten $x_i, y_i$ ist die Konfidenz hoch ($\rightarrow 1$) und geht mit wachsendem Abstand von diesen verloren ($\rightarrow 0$). "Nähe" bemisst sich hierbei an der Auflösung des Sensors. Daher wird im folgenden als erstes die Auflösung eines Sensors am Boden bestimmt. Der Scanmechanismus des Sensors soll eine vertikale und eine horizontale Achse derart besitzen, dass die Scanrichtungen - wie Polarkoordinaten - mittels eines Azimutwinkels $\varphi$ und eines Elevationswinkels $\vartheta$ beschrieben werden können. Die Schnittpunkte der zu den Bildpixeln gehörenden Messstrahlen des Sensors (mit der Höhe $H$) mit einem ideal ebenen Untergrund $z = 0$ definieren dann die Knoten eines krummlinigen Gitters, dessen Gitterlinien die Koordinatenlinien von ebenen Polarkoordinaten in der x,y-Ebene sind. (Dies sind konzentrische Kreise um den Ursprung $(x,y) = (0,0)$ bzw. vom Ursprung ausgehende radiale Strahlen.) Es mögen $\rho, \varphi$ diese Polarkoordinaten in der x,y-Ebene bezeichnen:

$$x = \rho \cos \varphi$$

$$y = \rho \sin\varphi$$

bzw. für x>0 invers

$$\rho = \sqrt{x^2 + y^2}$$

$$\varphi = \arctan\left(\frac{y}{x}\right)$$

Die radiale Auflösung des krummlinigen Gitters am Boden (also der Abstand von einem Knoten zum nächsten) ist näherungsweise durch

$$\Delta\rho(x,y) \approx \Delta\vartheta \cdot H \cdot \left(1 + \frac{\rho^2(x,y)}{H^2}\right)$$

gegeben. Hierbei ist $\Delta\vartheta$ die konstante, vertikale Winkelauflösung des Sensors, z.B. $\Delta\vartheta = 0.5°$. $\Delta\rho$ hängt vom betrachteten Ortspunkt (x,y) am Boden ab, sowie von der Höhe des Sensors über diesem Boden. Die Winkelauflösung des Gitters in Azimut (also der Abstand von zwei benachbarten Knoten in der Koordinate $\varphi$) ist einfach durch

$$\Delta\varphi(x,y) = const = horizontale\ Winkelauflösung\ des\ Sensors\ ,$$

z.B. $\Delta\varphi = 0{,}5°$ gegeben.

$T_i(x, y)$ soll im folgenden eine Funktion sein, die

(1) am Ort $(x, y) = (x_i , y_i)$ den Wert 1 annimmt;
(2) und in radialer Richtung etwa im Abstand $\Delta\rho_i = \Delta\rho(x_i, y_i)$ auf 0 absinkt sowie
(3) längs der azimutalen Koordinatenlinien etwa im Winkelabstand $\Delta\varphi$ auf 0 absinkt.

Es sei weiterhin

$$p(\lambda; \lambda_0, \Delta\lambda)$$

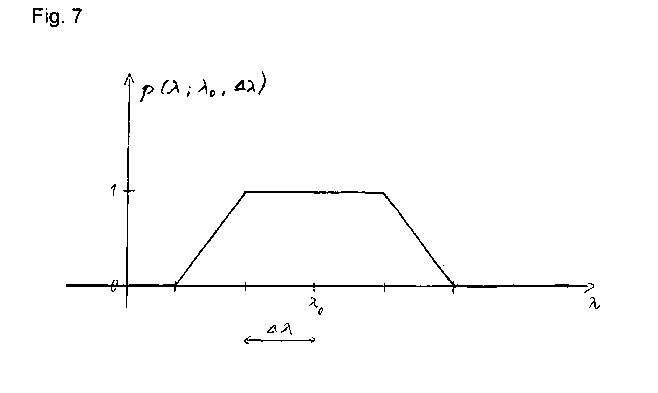

ganz allgemein eine Funktion der Variablen $\lambda$, die für $\lambda = \lambda_0$ den Wert 1 annimmt und für $|\lambda - \lambda_0| > \Delta\lambda$ rasch gegen 0 geht. (Eine solche Funktion ist als stückweise lineare Funktion in Fig. 7 beispielhaft dargestellt.) Damit lässt sich $T_i(x, y)$ wie folgt konstruieren:

$$T_i(x,y) = \overline{T}_i(\rho,\varphi) = \min\{p(\rho; \rho_i, \Delta\rho_i), p(\varphi; \varphi_i, \Delta\varphi)\}$$

Hierbei sind $\rho_i, \varphi_i$ die Polarkoordinaten der Messpunktkoordinaten $(x_i, y_i)$:

$$\rho_i\tilde{} = \sqrt{x_i^2 + y_i^2}$$

$$\varphi_i = \arctan\!\left(\frac{y_i}{x_i}\right)$$

Die Konfidenzfunktion insgesamt lässt sich nun unter Berücksichtung aller vorhandenen Messpunkte wie folgt konstruieren:

$$T(x,y) = \overline{T}(\rho,\varphi) = \max_{i=1\ldots I}\left\{\overline{T_i}(\rho,\varphi)\right\}$$

### 2 Grabenranderkennung mittels Matched Filtering

### 2.1 Übersicht

Es wird die Methode des "Matched Filter" im "Zeitbereich" zur Erkennung von rechteckigen Gräben verschiedener Verlaufsrichtungen und Breiten beschrieben. Wie bereits oben erläutert, hat es sich in der Praxis besser bewährt, diese Routine auf die länglichen Grabenrandbereiche anzuwenden als auf die Gräben selbst, so dass eigentlich von "Grabenranderkennung" gesprochen werden muss.

Beim Matched Filtering wird das Analysefilter - im vorliegenden Fall eine richtungsorientierte Grabenschablone definierter Breite - mit dem zu analysierenden Signal - im vorliegenden Fall der normierten Graben(rand)funktion $W(x, y)$ (siehe oben stehende Beschreibung zum Verfahrenschritt "Überwindung von Gräben") gefaltet. Das Faltungssignal nimmt Werte zwischen -1 und 1 an und zeigt damit für jeden Ort $(x,y)$ an, inwieweit das Analysefilter "passt" (-1 für keine Passung, 1 für exakte Passung, 0 für ebenes Gelände).

Für jedes neue Analysefilter gibt es ein eigenes Faltungssignal, das mit den anderen Faltungssignalen verglichen wird. Das an einem Ort $(x,y)$ jeweils größte Faltungssignal entspricht an ehesten der tatsächlichen Ausrichtung und Breite eines Grabens im analysierten Signal. Wenn dieses maximale Signal eine bestimmte Schwelle überschreitet, wird davon ausgegangen, dass an diesem Ort ein Graben der betreffenden Ausrichtung und Breite vorhanden ist.

### 2.2 Mathematische Formulierung

Die Analysefilter seien mit

$$z = t_k(x',y';b)$$

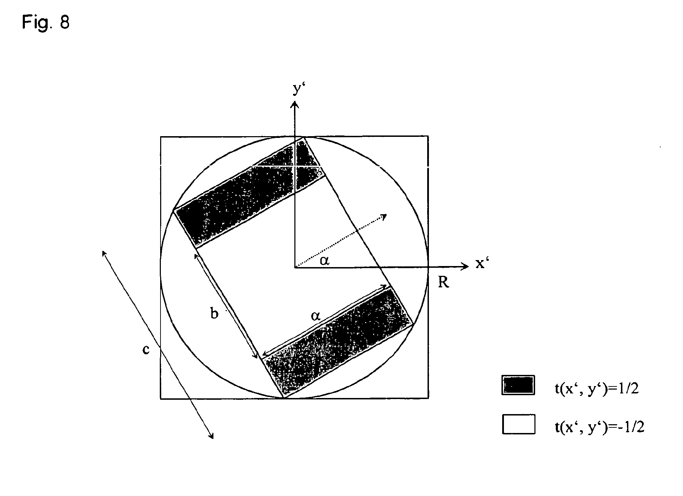

bezeichnet und wie in Fig. 8 dargestellt definiert: der gelbe Bereich erhält den Wert - ½, der grüne den Wert ½, und der restliche Definitionsbereich den Wert 0. Jeder Index k gehört zu einer anderen Orientierung. In einer ersten Implementierung kann man sich auf k=0,1,2,3 beschränken, vier elementaren Richtungen entsprechend:

    0. Grabenlängsverlauf parallel zur x-Achse ($\alpha = 0$ in Fig. 8)
    1. Grabenlängsverlauf parallel zur Hauptdiagonalen des x,y-KS ($\alpha = 45°$)
    2. Grabenlängsverlauf parallel zur y-Achse ($\alpha = 90°$)
    3. Grabenlängsverlauf parallel zur Nebendiagonalen des x,y-KS ($\alpha = 135°$)

Der Parameter $b$ definiert die Grabenbreite. Wie in Fig. 8 zu erkennen ist, gibt es auch eine Grabenlänge $a$. Dieser Parameter wird aber - im Gegensatz zu $b$ und $k$ - nicht variiert, sondern bei allen Schablonen gleich gewählt, und entspricht ungefähr der Fahrzeugbreite. Die Analysefilter sind ebenso wie die anderen Funktionen in der HK auf den Knoten eines quadratischen Gitters definiert.

Das richtungs- und breitenabhängige Faltungsintegral lautet am Ort $(x,y)$

$$F_k(x,y;b) = \frac{1}{T_b}\iint t_k(x',y';b)\,W(x+x',y+y')\,dx'\,dy'$$

mit dem Normierungsfaktor

$$T_b = \iint t_k (x', y'; b)^2 \, dx' \, dy' \, .$$

Integriert wird über den quadratischen Definitionsbereich der jeweiligen Schablone. Die Schablonen sind durch passende Wahl von c = 2b so gemacht, dass sie auf ideal ebenes Gelände nicht reagieren:

$$\iint t_k (x', y'; b) \, dx' \, dy' = 0$$

Der *Zahlenwert* $-1 \leq F_k(x,y;b) \leq 1$ gibt also an, wie gut das Signal $U(x,y)$ am Ort $(x,y)$ mit der Schablone $t_k(x', y';b)$ korreliert ist.

Die Grabenrichtungsfunktion

$$k_{\max} (x, y)$$

und die Grabenbreitenfunktion

$$b_{\max} (x, y)$$

identifizieren für jeden einzelnen Ort k-Index bzw. b-Breite, für den/die das Faltungsintegral den größten Wert annimmt, und lassen sich implizit wie folgt definieren:

$$F_{k_{\max}(x,y)} \big[ x, y; b_{\max} (x, y) \big] = \max_b \big\{ F_0(x, y; b), F_1(x, y; b), F_2(x, y; b), F_3(x, y; b) \big\}$$

Letztendlich zu berechnen ist die Funktion

$$F(x, y) = F_{k_{\max}(x,y)} \big[ x, y; b_{\max} (x, y) \big]$$

und zwar nur an den diskreten Knoten $(x_k, y_l)$:

$$F_{kl} = F(x_k, y_l)$$

Wenn $F_{kl}$ an einem Knoten $(x_k, y_l)$ eine definierte Schwelle $u$ (z.B. $u = 0.5$) erschreitet:

$$F_{kl} > u$$

gilt ein Grabenrandpunkt als an diesem Knoten erkannt; und die zugehörige Grabenbreite und -richtung ist durch

$$b_{\max}(x_k, y_l)$$

bzw.

$$k_{\max}(x_k, y_l)$$

gegeben.

**Liste der verwendeten Abkürzungen**

| G | Geländeverlaufsfunktion |
|---|---|
| A | Bodenverlaufsfunktion |
| T | Konfidenzfunktion |
| Z | Geländebewertungsfunktion |
| HK | Hinderniskarte |
| FE | Finites Flächenelement |
| EBK | Entfernungsbildkamera |
| EB | Entfernungsbild |
| KS | Koordinatensystem |
| DWT | Diskrete Wavelet Transformation |

**Patentansprüche**

1. Verfahren zur Hinderniserkennung und Geländeklassifikation für Geländefahrzeuge mit folgenden Verfahrensschritten

   - Erzeugung eines Entfernungsbilds des Geländes mittels eines entfernungsbildgebenden Sensors;
   - Umrechnung der Sensordaten in eine räumliche Fläche, die aus einzelnen finiten Flächenelementen besteht und die die vom Sensor abgetastete Szene modelliert, und Projektion der räumlichen Fläche auf eine in einem erdfesten Koordinatensystem dargestellten Geländeverlaufsfunktion;
   **gekennzeichnet durch**;
   - stetige Fortsetzung der Geländeverlaufsfunktion an undefinierten Stellen;
   - Erzeugung einer Konfidenzfunktion für die Geländeverlaufsfunktion in demselben Koordinatensystem wie die Geländeverlaufsfunktion, wobei die Konfidenzfunktion ein Maß für die Vertrauenswürdigkeit der Geländeverlaufsfunktion darstellt und abhängig ist vom Abstand eines Werts der Geländeverlaufsfunktion von einem Sensormesspunkt;
   - Erzeugung einer Bodenverlaufsfunktion **durch** Glättung der Geländeverlaufsfunktion;
   - Erzeugung einer Geländebewertungsfunktion **durch** Auswertung des Steigungsverhaltens der Geländeverlaufsfunktion, **durch** Vergleich der Geländeverlaufsfunktion mit der Bodenverlaufsfunktion sowie **durch** Auswertung der Konfidenzfunktion;
   - Klassifikation des Geländes hinsichtlich seiner Befahrbarkeit unter Verwendung der Geländebewertungsfunktion.

2. Verfahren nach Anspruch 1, **dadurch gekennzeichnet, dass** eine für das Fahrzeug mögliche Route zur Überquerung der im Gelände vorhandenen Gräben mittels folgender Verfahrensschritte erkannt wird:

   - Filterung der Geländebewertungsfunktion mit Grabenschablonen verschiedener Breiten und Richtungen gemäß der Methode des Matched Filtering zur Ermittlung des Grabenverlaufs oder Grabenrandverlaufs,
   - Suche nach möglichen Routen zur Grabenüberquerungen, von erkannten Grabenrandpunkten ausgehend und senkrecht zum Grabenrand verlaufend, und Validierung der Route mittels Verwendung der Gelände-, der Bodenverlaufs- und der Konfidenzfunktion.

3. Verfahren nach einem der vorangehenden Ansprüche, **dadurch gekennzeichnet, dass** die stetige Fortsetzung der Geländeverlaufsfunktion an undefinierten Stellen derart durchgeführt wird, dass eine lineare, zweidimensionale Ebene in die Szene gelegt wird, deren Optimalparameter aus der Geländeverlaufsfunktion in ihrem verfügbaren Definitionsbereich mittels Hough-Transformation berechnet werden.

4. Verfahren nach einem der vorangehenden Ansprüche, **dadurch gekennzeichnet, dass** die Glättung der Geländeverlaufsfunktion zur Ermittlung der Bodenverlaufsfunktion in zwei Stufen mit jeweils einer diskreten Wavelet-Transformation erfolgt, wobei in einem Zwischenschritt zwischen den beiden Stufen zunächst große Hindernisse entfernt werden.

5. Verfahren nach einem der vorangehenden Ansprüche, **dadurch gekennzeichnet, dass** die finiten Flächenelemente Dreieckselemente sind.

## Claims

1. Method for obstruction identification and terrain classification for cross-country vehicles, having the following method steps:

   - production of a distance image of the terrain by means of a distance-imaging sensor;
   - conversion of the sensor data to a spatial surface which comprises individual finite surface elements and models the scene scanned by the sensor, and projection of the spatial surface onto a terrain profile function which is represented in an earth-fixed co-ordinate system;
   **characterized by**
   - continuous continuation of the terrain profile function at undefined points;
   - production of a confidence function for the terrain profile function using the same co-ordinate system as the terrain profile function, with the confidence function representing a measure of the trustworthiness of the terrain profile function and being dependent on the distance between a value of the terrain profile function and a sensor measurement point;
   - production of a ground profile function by smoothing of the terrain profile function;
   - production of a terrain assessment function by evaluation of the gradient behaviour of the terrain profile function, by comparison of the terrain profile function with the ground profile function, and by evaluation of the confidence function;
   - classification of whether the terrain can be driven over, using the terrain assessment function.

2. Method according to Claim 1, **characterized in that** a possible route for the vehicle to cross over trenches in the terrain is identified by means of the following method steps:

   - filtering of the terrain assessment function with trench templates of various widths and directions using the matched filtering method to determine the trench profile or trench edge profile,
   - search for possible routes to cross over trenches, starting from identified trench edge points and running at right angles to the trench edge, and validation of the route by the use of the terrain profile function, the ground profile function and the confidence function.

3. Method according to one of the preceding claims, **characterized in that** the continuous continuation of the terrain profile function at undefined points is carried out in such a way that a linear, two-dimensional plane is applied to the scene, whose optimal parameters are calculated from the terrain profile function in its available definition area by means of Hough transformation.

4. Method according to one of the preceding claims, **characterized in that** the terrain profile function is smoothed in order to determine the ground profile function in two stages, in each case using a discrete wavelet transformation, with large obstructions first of all being removed in an intermediate step between the two stages.

5. Method according to one of the preceding claims, **characterized in that** the finite surface elements are triangular elements.

**EP 1 494 044 B1**

**Revendications**

1. Procédé de détection d'obstacles et de classification de terrain pour véhicules tout-terrains comprenant les étapes suivantes:

   - génération d'une image d'éloignement du terrain au moyen d'un capteur restituant une image d'éloignement ;
   - conversion des données du capteur dans une surface spatiale qui se compose d'éléments de surface finis individuels et qui modélise la scène acquise par le capteur et projection de la surface spatiale sur une fonction de tracé du terrain représentée dans un système de coordonnées terrestre ;
   **caractérisé par**
   - la poursuite continue de la fonction de tracé du terrain en différents endroits ;
   - génération d'une fonction de confiance pour la fonction de tracé du terrain dans le même système de coordonnées que la fonction de tracé du terrain, la fonction de confiance représentant une indication de l'indice de confiance de la fonction de tracé du terrain et étant dépendant de l'écart entre une valeur de la fonction de tracé du terrain et un point de mesure du capteur ;
   - génération d'une fonction de tracé du sol par lissage de la fonction de tracé du terrain ;
   - génération d'une fonction d'évaluation du terrain par évaluation du taux de pente de la fonction de tracé du terrain, par comparaison de la fonction de tracé du terrain avec la fonction de tracé du sol et par évaluation de la fonction de confiance ;
   - classification du terrain du point de vue de son aptitude au passage du véhicule en utilisant la fonction d'évaluation du terrain.

2. Procédé selon la revendication 1, **caractérisé en ce qu'**une trajectoire possible pour le véhicule en vue de contourner les ornières présentes sur le terrain est identifiée au moyen des étapes suivantes :

   - filtrage de la fonction d'évaluation du terrain avec des gabarits d'ornière de différentes largeurs et directions selon le procédé du filtrage concordant afin de déterminer le tracé de l'ornière ou le tracé de la bordure d'ornière ;
   - recherche des trajectoires possibles pour contourner les ornières en partant des points de bordure d'ornière détectés et s'étendant perpendiculairement au bord de l'ornière, et validation de la trajectoire en utilisant la fonction de tracé du terrain, de tracé du sol et de confiance.

3. Procédé selon l'une des revendications précédentes, **caractérisé en ce que** la poursuite continue de la fonction de tracé du terrain en différents endroits est effectuée de manière à faire entrer en scène un plan linéaire bidimensionnel dont les paramètres optimaux sont calculés à partir de la fonction de tracé du terrain dans sa plage de définition disponible au moyen d'une transformation de Hough.

4. Procédé selon l'une des revendications précédentes, **caractérisé en ce que** le lissage de la fonction de tracé du terrain en vue de déterminer la fonction de tracé du sol est effectué en deux niveaux avec à chaque fois une transformation de Wavelet discrète, les grands obstacles étant tout d'abord supprimés dans une étape intermédiaire entre les deux niveaux.

5. Procédé selon l'une des revendications précédentes, **caractérisé en ce que** les éléments de surface finis sont des éléments triangulaires.

Fig. 1

Fig. 2

Fig. 3

Fig. 4

FE

Ein Finites Element
im Raum

(1,1)

(1,N)

Entfernungsbild

(M,1)

(M,N)

Fig. 5

Fig. 6

Fig. 7

$p(\lambda; \lambda_0, \Delta\lambda)$

$1$

$0$

$\lambda_0$

$\Delta\lambda$

$\lambda$

Fig. 8